# EUROPÄISCHE PATENTSCHRIFT

(11) **EP 0 833 729 B1**
(45) Veröffentlichungstag und Bekanntmachung des Hinweises auf die Patenterteilung: **03.11.1999**
(21) Anmeldenummer: 96914859.2
(22) Anmeldetag: 14.05.1996
(51) Int. Cl.: B29B 17/00, B32B 9/02, B32B 21/10, B29C 70/08, B29K 1/00

(54) **VERBUNDBAUTEIL, INSBESONDERE VERBUNDVERKLEIDUNGSTEIL UND VERFAHREN ZUR HERSTELLUNG DIESES BAUTEILS**
COMPOSITE COMPONENT, ESPECIALLY A COMPOSITE CLADDING COMPONENT, AND PROCESS FOR ITS PRODUCTION
CONSTITUANT COMPOSITE, NOTAMMENT CONSTITUANT COMPOSITE DE GARNISSAGE ET SON PROCEDE DE PRODUCTION

(30) Priorität: 21.05.1995 DE 19518186; 28.09.1995 DE 19536074
(43) Veröffentlichungstag der Anmeldung: 08.04.1998
(73) Patentinhaber: Möller Plast GmbH, 33649 Bielefeld (DE)
(72) Erfinder: BECKMANN, Friedhelm, D-32120 Hiddenhausen (DE); HESCH, Rolf, D-32657 Lemgo (DE)
(74) Vertreter: Schirmer, Siegfried, Dipl.-Ing.
(86) Internationale Anmeldenummer: DE9600842
(87) Internationale Veröffentlichungsnummer: WO9637355

(56) Entgegenhaltungen:
- EP-A- 0 631 865
- WO-A-82/03359
- WO-A-93/04226
- DE-A- 2 120 149
- DE-A- 2 125 453
- DE-A- 2 639 470
- DE-A- 3 331 611
- DE-A- 3 641 466
- DE-A- 3 902 023
- DE-A- 4 105 285
- DE-A- 4 119 295
- DE-A- 4 134 714
- DE-A- 4 206 895
- DE-A- 4 403 977
- DE-A- 4 428 613
- FR-A- 2 491 824
- DATABASE WPI Section Ch, Week 8008 Derwent Publications Ltd., London, GB; Class A, AN 80-13919C (08) XP002012018 & JP,A,55 005 881 (IKEDA BUSSAN K.K.) , 17.Januar 1980

## Beschreibung

Die Erfindung betrifft ein Verbundbauteil, insbesondere Verbundverkleidungsteil, unter Verwendung eines Bindewerkstoffs mit einem Verstärkungsmaterial aus Naturfasern sowie ein Verfahren zur Herstellung dieses Bauteils.

Verkleidungsteile der beschriebenen Art werden in unterschiedlichen Industriebereichen eingesetzt und sollen neben der optischen Funktion gute mechanische Eigenschaften aufweisen. Hierzu gehören eine hohe Formstabilität sowie ein günstiges Temperaturverhalten. Darüber hinaus wird eine begrenzte Feuchtigkeitsaufnahme sowie ein möglichst geringes Gewicht gefordert. Wegen der oft komplexen Oberflächengeometrie wird ein hoher Freiheitsgrad bei dem Formgebungsprozeß erwartet. Die Oberfläche wird mit dekorativen Folienmaterialien auf Basis PVC, PVC/ABS, PUR, TPO usw. sowie Dekormaterialien auf Basis von Textilien, Teppich und Leder versehen. Der Gesamtaufbau soll ein Mindestmaß an schall- und/oder wärmedämmenden Eigenschaften aufweisen und nach einem recyclingfreundlichen Konzept herstellbar sein.

Nach dem bisherigen Stand der Technik werden derartige Verkleidungsteile als Vollkunststoffteile oder als faserverstärkte Preßteile hergestellt. Diese bestehen entweder aus Holzfaserwerkstoffen mit einem duroplastischen Bindemittel oder aus thermoplastischen Spritzgieß-/Preßteilen mit Verstärkungseinlagen aus synthetischen oder natürlichen Fasermaterialien. Die Holzfaserwerkstoffe weisen nur eingeschränkte mechanische Eigenschaften auf. Der Einsatz von synthetischen Verstärkungsfasern führt zu einer Belastung des Arbeitsbereichs und zu gesundheitlichen Risiken. Der Einsatz von Naturfasern führt bedingt durch die verschiedenen Aufbereitungsmethoden zu Qualitätsschwankungen sowie aufgrund der noch geringen Verfügbarkeit und der gestiegenen Nachfrage zu einer hohen Kostenbelastung.

Ein bekanntes Produktionsverfahren sieht das Hinterschäumen von einem vorgeformten Dekorteil vor. Hierbei handelt es sich um ein mehrstufiges und damit kostenaufwendiges Verfahren, wobei der vernetzte Schaum zu erheblichen Recyclingproblemen fuhrt. Im DE-Gebrauchsmuster G 93 01 022.2 ist ein Innenverkleidungselement beschrieben, das aus einem Holzfaserverbundwerkstoff besteht, in einem ersten Schritt räumlich verformt, und in einem weiteren Verfahrensschritt mit einem Dekormaterial beschichtet wird. Dieser mehrstufige Ablauf ist aufwendig, das Eigenschaftsniveau grenzt die universelle Einsetzbarkeit ein. In der DE 41 19 295 A1 wird u. a. der Einsatz von Jutefasern, -fäden und -geweben beschrieben. Diese Materialien sind im Vergleich zur Recyclingjute teuer und führen bei großen Zugabemengen zu erheblichen Kostennachteilen. In der DE 42 29 078 A1 wird der Einsatz einer Recyclingjutefaser als Zusatz bei der Asphaltherstellung beschrieben. Die Faserlänge wird mit max. 4 mm, vorzugsweise 1 bis 2 mm angegeben.

Diese Faserlängen sind deutlich zu kurz, um eine ausreichende Verstärkung/Stabilisierung zu gewährleisten. Gerade die Herstellung eines längeren Faserprodukts ist die Voraussetzung zur Herstellung hochbeanspruchter Verkleidungsteile.

Aus der DE 41 39 257 A1 ist eine Recycling-Kunststoffformmasse bekannt, der zur Erhöhung der Festigkeit Verstärkungsfasern beigemischt werden, wobei die Verstärkungsfasern aus Glasfasern gebildet sind. Die Faserlängen sollen zwischen 1,25 mm und 4,5 mm liegen. Mit einer solchen Faserlänge ist keine ausreichende Stabilisierung zu erreichen.

Der Erfindung liegt die Aufgabe zugrunde, ein Verbundbauteil, insbesondere ein Verbundverkleidungsteil, Zu schaffen, das kostengünstig herstellbar ist bei Gewährleistung einer den gestellten Anforderungen genügenden Festigkeit.

Diese Aufgabe wird erfindungsgemäß durch ein ganz oder teilweise aus recycelten Naturfasern, insbesondere Jute- oder Sisalfasern, gebildetes Verstärkungsmaterial gelöst. Dabei können die Gesamtkosten für das Verbundbauteil deutlich gesenkt werden, wenn recycelte Jute-/Sisalfasern eingesetzt werden, die aus der Aufbereitung von Verpackungsmaterialien stammen. Die Verfügbarkeit dieser Produkte ist weltweit in ausreichender Menge gegeben. So zählt die Jutefaser zu dem nach der Baumwollfaser am häufigsten angebauten Naturfaserprodukt. Die Fasern verhalten sich CO₂-neutral und liegen im Verpackungsbereich für den weiteren Einsatz bereits in einer günstigen Ausgangsform vor. Das Ausgangsprodukt ist jedoch zu grobfaserig und würde bei der weiteren Verarbeitung zu Dosierproblemen sowie in schwierigen Konturbereichen zu einer Entmischung zwischen Fasermaterial und Bindeharzsystem führen. Diese Fasern werden deshalb ausgehend von den Gewebestrukturen zunächst in einem mehrstufigen Prozeß zu Fasern mit einer Faserlänge von 2 mm bis 100 mm aufbereitet und als Einzelfasern oder einem hieraus hergestellten Gewebeverbund mit einem Bindeharzsystem zu einem Trägerteil verformt. Zur Variation der mechanischen Eigenschaften können den Jute-/Sisalfasern auch geringe Mengen (10 % bis 30 %) anderer Naturfasern wie Flachs, Hanf, Ramie, Kenaf, Chinaschilf, Baumwolle oder Kokus sowie Füllstoffe wie Holzfasern oder Schäben zugegeben werden.

Die Verarbeitung kann hierbei im Spritzgieß- oder Preßverfahren erfolgen. Das als Verstärkungseinlage dienende Naturfasermaterial kann dabei ungerichtet` wirr, gerichtet, geformt oder vorgeformt eingebracht werden. Dabei sind auch Kombinationsmöglichkeiten durch Schichtenbildung der Verstärkungseinlage möglich. In einer weiteren Ausführungsform wird das zur Dekorseite liegende Verstärkungsmaterial aus Kurzfasern und eine zweite Schicht aus gerichteten oder ungerichteten Langfasern gebildet. Dabei weisen die Kurzfasern vorzugsweise eine Länge zwischen 2 mm und 10 mm auf, die Langfasern eine Länge zwischen 10 mm und 100 mm. Als Bindeharz werden dabei vornehmlich Materialien auf Basis von Naturstoffen (Stärkeprodukte, PHB, CA, CAB, PU, PHA, PHB, PCL usw.), thermoplastische Werkstoffe (z. B. PP, ABS, PC/ABS, PA, PET) sowie duroplastische Systeme (z. B. Epoxydharz) sowie Kombinationen von Duro- und Thermoplasten eingesetzt. Zweckmäßigerweise ist ein träge reagierender Duroplast zu verwenden, der so eingestellt ist, daß er erst nach erfolgter Verformung aushärtet und die Form endgültig fixiert. Das Fertigteilgewicht läßt sich durch Zugabe eines Treibmittelsystems zu diesen Werkstoffen und somit geschäumten Materialien deutlich reduzieren.

Die Haftung zwischen diesen Werkstoffen und den Naturfasern läßt sich durch Einsatz von Haftvermittlern verbessern. Die Recyclingfasern können durch Zugabe von anderen Naturfasern wie Flachs, Hanf, Sisal, Ramie, Kenaf usw. in ihrem Eigenschaftsbild variiert werden.

Die Dekorstoffe werden entweder direkt mit in das Produktionswerkzeug eingelegt und bei dem Verformungsvorgang mit dem Tragerwerkstoff verbunden oder in einem an den Verformungsvorgang anschließenden Verfahrensschritt aufgebracht. Hierbei kann das Dekormaterial aus Folie, Teppich, Textil, Leder, Kunstleder oder Echtholz gebildet sein. Bei einer bevorzugten Ausführung ist das Dekormaterial aus Fasern von Einjahrespflanzen gebildet. Die Rohdichte der erfindungsgemäßen Bauteile beträgt 10 kg/m³ bis 75 kg/m³.

Nach dem erfindungsgemäßen Verfahren zur Herstellung werden alte Jute- oder Sisalsäcke oder Alttextilien in rechteckige, vorzugsweise quadratische Stücke von schütt- und/oder fließfähiger Konsistenz vorzerkleinert und diese Stücke in einer Mühle zerfasert und anschließend diese Fasern mit einem Bindemittel und/oder mit Thermofasern vermischt bzw. vernadelt, wobei aus dem gewonnenen Konglomerat Vliese oder Matten hergestellt werden, die zum Aufschmelzen der Thermofasern und/oder zum Trocken und/oder zum Aushärten bzw. Verfestigen des Bindemittels erhitzt werden. In Ausgestaltung der Erfindung erfolgt die Vorzerkleinerung durch Trenn- und Schneidwerkzeuge, vorzugsweise durch zwei im rechten Winkel zueinander angeordnete Furnierschneider, Guillotinen, Sichelhäcksler oder Messermühlen bzw. Granulatoren, wobei zweckmäßigerweise die Vorzerkleinerung durch eine Schneidmaschine erfolgt, die mit mindestens einem durchgehenden Quermesser ausgerüstet ist und zusätzlich eine Reihe von Längsmessern besitzt. Die Zerfaserung kann durch Mühlen erfolgen, die durch Prall, Reibung oder Scherung zerfasern. Besonders vorteilhaft ist die Zerfaserung mit einer Hammermühle. Vorteilhafterweise wird das zerkleinerte Material in einem Zwischenschritt angefeuchtet. Nach einem weiteren Verfahrensschritt der Erfindung wird beim Zerfasern in einer Mühle gleichzeitig pulverförmiger oder hochviskoser Klebstoff auf die Fasern aufgebracht, wobei die Beleimung der Fasern durch Zerstäubung des Bindemittels erfolgen kann. Nach der Zerfaserung können bis zu 20 Gewichtsprozente Thermofasern beigemischt werden. Die Aussonderung von Fremdstoffen erfolgt zweckmäßigerweise nach der Vorzerkleinerung bzw. der Zerfaserung. Es besteht die Möglichkeit, die Abdeckungen der äußeren Sichtseiten mit Durchbrechungen zu versehen.

## Patentansprüche

1. Verfahren zur Herstellung von Verbundbauteilen, insbesondere Verbundverkleidungsteilen, unter Verwendung eines Bindewerkstoffs mit einem Verstärkungsmaterial aus Naturfasern, dadurch gekennzeichnet, daß aus Jute- oder Sisalfasern bestehende Transportgewebe, insbesondere Säcke oder Alttextilien, in rechteckige, vorzugsweise quadratische Stücke von schütt- und/oder fließfähiger Konsistenz vorzerkleinert und diese Stücke in einer Mühle durch Prall, Reibung oder Scherung in eine Länge von 2 mm bis 100 mm zerfasert und anschließend diese Fasern mit einem Bindemittel und/oder mit Thermofasern vermischt bzw. vernadelt werden, wobei aus dem gewonnenen Konglomerat Vliese oder Matten hergestellt werden, die zum Aufschmelzen der Thermofasern und/oder zum Trocknen und/oder zum Aushärten bzw. Verfestigen des Bindemittels erhitzt werden.

2. Verfahren nach Anspruch 1, dadurch gekennzeichnet, daß die Vorzerkleinerung durch Trenn- und Schneidwerkzeuge erfolgt, vorzugsweise durch zwei im rechten Winkel zueinander angeordnete Furnierschneider, Guillotinen, Sichelhäcksler oder Messermühlen bzw. Granulatoren.

3. Verfahren nach Anspruch 1 oder 2, dadurch gekennzeichnet, daß die Vorzerkleinerung durch eine Schneidemaschine erfolgt, die mit mindestens einem durchgehenden Quermesser ausgerüstet ist und zusätzlich eine Reihe von Längsmessern besitzt.

4. Verfahren nach einem der Ansprüche 1 bis 3, dadurch gekennzeichnet, daß die Zerfaserung mit einer Hammermühle erfolgt.

5. Verfahren nach einem der Ansprüche 1 bis 4, dadurch gekennzeichnet, daß das zerkleinerte Material in einem Zwischenschritt angefeuchtet wird.

6. Verfahren nach einem der Ansprüche 1 bis 5, dadurch gekennzeichnet, daß beim Zerfasern in einer Mühle gleichzeitig pulverförmiger oder hochviskoser Klebstoff auf die Fasern aufgebracht wird.

7. Verfahren nach einem der Ansprüche 1 bis 6, dadurch gekennzeichnet, daß die Beleimung der Fasern durch Zerstäubung des Bindemittels erfolgt.

8. Verfahren nach einem der Ansprüche 1 bis 7, dadurch gekennzeichnet, daß nach der Zerfaserung bis zu 20 % Gewichtsprozente Thermofasern beigemischt werden.

9. Verfahren nach einem der Ansprüche 1 bis 8, dadurch gekennzeichnet, daß nach der Vorzerkleinerung bzw. der Zerfaserung eine Aussonderung von Fremdstoffen durchgeführt wird.

10. Verfahren nach einem der Ansprüche 1 bis 9, dadurch gekennzeichnet, daß die Abdeckungen der äußeren Sichtseiten mit Durchbrechungen versehen werden.

11. Verbundbauteil hergestellt nach den Verfahren nach einem der Ansprüche 1 bis 10, gekennzeichnet durch schichtweise aufgebrachtes Verstärkungsmaterial aus Naturfasern, vorzugsweise recycelte Naturfasern, in Schichten aus Verstärkungsfasern mit einer Länge von 2 mm bis 10 mm und Verstärkungsfasern mit einer Länge von 10 mm bis 100 mm.

12. Verbundbauteil nach Anspruch 11, dadurch gekennzeichnet, daß der Anteil an Naturfasern zwischen 10 % und 90 % liegt.

13. Verbundbauteil nach Anspruch 11 oder 12, dadurch gekennzeichnet, daß den Recyclingfasern zwischen 10 % und 30 % andere Faserwerkstoffe oder Füllstoffe zugemischt sind.

14. Verbundbauteil nach einem der Ansprüche 11 bis 13, dadurch gekennzeichnet, daß das Verstärkungsmaterial ungerichtet, wirr, gerichtet, geformt oder vorverformt einbringbar ist.

15. Verbundbauteil nach Anspruch 14, dadurch gekennzeichnet, daß das Verstärkungsmaterial in Form eines Gewebes oder Vlieses einbringbar ist.

16. Verbundbauteil nach einem der Ansprüche 11 bis 15, dadurch gekennzeichnet, daß der Verbundbauteil im Spritzgießverfahren oder Preßverfahren hergestellt ist.

17. Verbundbauteil nach einem der Ansprüche 11 bis 16, dadurch gekennzeichnet, daß mindestens eine Schicht Schaumstruktur aufweist.

18. Verbundbauteil nach einem der Ansprüche 11 bis 16, dadurch gekennzeichnet, daß mindestens eine äußere Sichtseite mit einem Dekormaterial versehen ist.

19. Verbundbauteil nach Anspruch 18, dadurch gekennzeichnet, daß das Dekormaterial aus Folie, Teppich, Textil, Leder, Kunstleder oder Echtholz gebildet ist.

20. Verbundbauteil nach Anspruch 18, dadurch gekennzeichnet, daß das Dekormaterial aus Fasern von Einjahrespflanzen gebildet ist.

21. Verbundbauteil nach einem der Ansprüche 11 bis 20, dadurch gekennzeichnet, daß das zur Dekorseite liegende Verstärkungsmaterial aus Fasern mit einer Länge von 2 mm bis 10 mm und die anschließende Schicht aus gerichteten oder ungerichteten Fasern mit einer Länge von 10 mm bis 100 mm gebildet ist.

22. Verbundbauteil nach einem der Ansprüche 11 bis 21, gekennzeichnet durch eine Rohdichte von 10 kg/m³ bis zu 75 kg/m³.

## Claims

1. Method for the manufacture of composite structural members, in particular composite cladding members, with the use of a binding material with a reinforcing material of natural fibres, characterised in that transport textile fabrics consisting of fibres of jute or sisal, in particular sacks or old textiles, are preliminarily comminuted into rectangular, preferably square pieces of heapable and/or pourable consistency and these pieces are unravelled in a mill by impact, friction or shear into a length of 2 to 100 millimetres and these fibres are subsequently intermixed or interspersed with a binding agent and/or with thermal fibres, wherein fleeces or mats are produced from the obtained conglomerate and heated for the melting of the thermal fibres and/or for the drying and/or for the setting or solidifying of the binding agent.

2. Method according to claim 1, characterised in that the preliminary comminution takes place by severing or cutting tools, preferably by two veneer cutters, guillotines, sickle choppers or blade mills or granulators, which are arranged at right angles.

3. Method according to claim 1 or 2, characterised in that the preliminary comminution takes place by a cutting machine which is equipped with at least one continuous transverse blade and additionally comprises a row of longitudinal blades.

4. Method according to one of the claims 1 to 3, characterised in that the unraveling takes place by a hammer mill.

5. Method according to one of the claims 1 to 4, characterised in that the comminuted material is moistened in an intermediate step.

6. Method according to one of the claims 1 to 5, characterised in that the powdery or highly viscous adhesive substance is applied onto the fibres simultaneously with the unraveling in a mill.

7. Method according to one of the claims 1 to 6, characterised in that the glue-coating of the fibres takes place by atomisation of the binding agent.

8. Method according to one of the claims 1 to 7, characterised in that up to 20% by weight of thermal fibres are admixed after the unraveling.

9. Method according to one of the claims 1 to 8, characterised in that a separation of foreign substances is carried out after the preliminary comminution or the unraveling.

10. Method according to one of the claims 1 to 9, characterised in that the coverings of the outer visible sides are provided with passages.

11. Composite structural member manufactured according to the method according to one of the claims 1 to 10, characterised by reinforcing material of natural fibres, preferably recycled natural fibres, applied in layers of reinforcing fibres of a length of 2 to 10 millimetres and of reinforcing fibres of a length of 10 to 100 millimetres.

12. Composite structural member according to claim 11, characterised by the proportion of natural fibres lies between 10 and 90%.

13. Composite structural member according to claim 11 or 12, characterised in that between 10 and 30% of other fibrous substances or fillers are admixed to the recycled fibres.

14. Composite structural member according to one of the claims 11 to 13, characterised in that the reinforcing material is introducible nondirectionally, irregularly, directionally, shaped or preliminarily distorted.

15. Composite structural member according to claim 14, characterised in that the reinforcing material is introducible in the form of a textile fabric or a fleece.

16. Composite structural member according to one of the claims 11 to 15, characterised in that the composite structural member is manufactured by an injection-moulding process or a pressing process.

17. Composite structural member according to one of the claims 11 to 16, characterised in that at least one layer has a foam structure.

18. Composite structural member according to one of the claims 11 to 16, characterised in that at least one outer visible side is provided with a decorative material.

19. Composite structural member according to claim 18, characterised in that the decorative material is formed of foil, carpet, textile, leather, imitation leather or real wood.

20. Composite structural member according to claim 18, characterised in that the decorative material is formed of fibres of annual plants.

21. Composite structural member according to one of the claims 11 to 20, characterised in that the reinforcing material lying towards the decorative side is formed of fibres of a length of 2 to 10 millimetres and the adjoining layer is formed of directed or undirected fibres of a length of 10 to 100 millimetres.

22. Composite structural member according to one of the claims 11 to 21, characterised by a bulk density of 10 to 75 kilograms per cubic metre.

## Revendications

1. Procédé de fabrication de pièces composites, notamment de pièces composites d'habillage, utilisant un liant et un matériau de renforcement à base de fibres naturelles,
caractérisé en ce qu'
• à partir d'un tissu de transport formé de fibres de jute ou de sisal, notamment de sacs ou de vieux tissus, on découpe en morceaux rectangulaires, de préférence carrés, ayant une consistance permettant le déversement et/ou l'écoulement, et on défibre ces morceaux dans un broyeur par choc, frottement ou cisaillement, suivant une longueur de 2 mm à 100 mm, et
• ensuite, on mélange les fibres à un liant et/ou à des fibres thermoplastiques, et à partir du agglomérat obtenu, on fabrique des nappes ou des non-tissés que l'on chauffe pour faire fondre les fibres thermoplastiques et/ou pour sécher et/ou durcir ou renforcer le liant.

2. Procédé selon la revendication 1,
caractérisé en ce que
la réduction préalable est faite par des outils de coupe, de préférence avec deux couteaux disposés à l'équerre, des guillotines, des hachoirs à faux ou des broyeurs à couteaux ou des granulateurs.

3. Procédé selon la revendication 1 ou 2,
caractérisé en ce que
la réduction préalable est faite par une machine de coupe ayant au moins un couteau transversal continu ainsi qu'une série de couteaux longitudinaux.

4. Procédé selon l'une quelconque des revendications 1 à 3,
caractérisé en ce que
le défibrage se fait dans un broyeur à marteaux.

5. Procédé selon l'une quelconque des revendications 1 à 4,
caractérisé en ce que
la matière réduite est humidifiée au cours d'une étape intermédiaire.

6. Procédé selon l'une quelconque des revendications 1 à 5,
caractérisé en ce qu'
en défibrant dans un broyeur, on applique en même temps un agent adhésif pulvérulent ou très visqueux sur les fibres.

7. Procédé selon l'une quelconque des revendications 1 à 6,
caractérisé en ce que
l'encollage des fibres se fait par pulvérisation du liant.

8. Procédé selon l'une quelconque des revendications 1 à 7,
caractérisé en ce qu'
après le défibrage, on ajoute des fibres thermoplastiques jusqu'à 20 % en poids.

9. Procédé selon l'une quelconque des revendications 1 à 8,
caractérisé en ce qu'
après la réduction préalable ou le défibrage, on sépare les corps étrangers.

10. Procédé selon l'une quelconque des revendications 1 à 9,
caractérisé en ce qu'
on munit de passages le côté apparent extérieur avec.

11. Pièce composite réalisée par le procédé selon l'une quelconque des revendications 1 à 10,
caractérisée par
une matière de renforcement du côté visible, formée de fibres naturelles, de préférence des fibres naturelles recyclées, comme couches de fibres de renforcement d'une longueur comprise entre 2 mm et 10 mm et de fibres de renforcement d'une longueur de 10 mm à 100 mm.

12. Pièce composite selon la revendication 11,
caractérisée en ce que
la teneur en fibres naturelles est comprise entre 10 % et 90 %.

13. Pièce composite selon les revendications 11 ou 12,
caractérisée en ce qu'
aux fibres de recyclage, on ajoute entre 10 % et 30 % d'autres fibres ou matériaux de remplissage.

14. Pièce composite selon l'une quelconque des revendications 11 à 13,
caractérisée en ce que
la matière de renforcement n'est pas alignée, est libre, est stratifiée, est formée ou est préformée pour son introduction.

15. Pièce composite selon la revendication 14,
caractérisée en ce que
la matière de renforcement est introduite sous la forme d'un tissu ou d'un non-tissé.

16. Pièce composite selon l'une quelconque des revendications 11 à 15,
caractérisée en ce qu'
elle est fabriquée par injection ou compression.

17. Pièce composite selon l'une quelconque des revendications 11 à 16,
caractérisée en ce qu'
elle comporte au moins une couche ayant une structure de mousse.

18. Pièce composite selon l'une quelconque des revendications 11 à 16,
caractérisée en ce qu'
au moins un côté apparent extérieur est muni d'une matière décorative.

19. Pièce composite selon la revendication 18,
caractérisée en ce que
la matière décorative est une feuille, un tapis, un produit textile, du cuir, du cuir artificiel ou du bois naturel.

20. Pièce composite selon la revendication 18,
caractérisée en ce que
la matière de décoration est formée de fibres de plantes annuelles.

21. Pièce composite selon l'une quelconque des revendications 11 à 20,
caractérisée en ce que
la matière de renforcement située du côté du décor est formée de fibres d'une longueur de 2 mm à 10 mm, et la couche suivante est formée de fibres alignées ou non alignées ayant une longueur comprise entre 10 mm et 100 mm.

22. Pièce composite selon l'une quelconque des revendications 11 à 21,
caractérisée par
une densité brute comprise entre 10 kg/m³ et 75 kg/m³.
